Europäisches Patentamt

(19) European Patent Office

Office européen des brevets

(11) Numéro de publication : **0 308 310 B1**

# (12) FASCICULE DE BREVET EUROPEEN

(45) Date de publication du fascicule du brevet :
**10.04.91 Bulletin 91/15**

(21) Numéro de dépôt : **88402289.8**

(22) Date de dépôt : **12.09.88**

(51) Int. Cl.⁵ : $B60T\ 13/52$

(54) **Servomoteur d'assistance au freinage.**

(30) Priorité : **17.09.87 FR 8712868**

(43) Date de publication de la demande :
**22.03.89 Bulletin 89/12**

(45) Mention de la délivrance du brevet :
**10.04.91 Bulletin 91/15**

(84) Etats contractants désignés :
**DE ES FR GB IT**

(56) Documents cités :
**EP-A- 0 153 238**
**FR-A- 2 591 172**
**FR-A- 2 597 821**

(73) Titulaire : **BENDIX EUROPE Services**
**Techniques S.A.**
**126 rue de Stalingrad**
**F-93700 Drancy (FR)**

(72) Inventeur : **Gautier, Jean-Pierre Bendix France**
**126 Rue de Stalingrad**
**F-93700 Drancy (FR)**
Inventeur : **Perez, Miguel Bendix France**
**126 Rue de Stalingrad**
**F-93700 Drancy (FR)**
Inventeur : **Verbo, Pedro Bendix France**
**126 Rue de Stalingrad**
**F-93700 Drancy (FR)**

(74) Mandataire : **Lejet, Christian**
**Bendix Europe Service Techniques Service**
**Brevets 126 rue de Stalingrad**
**F-93700 Drancy (FR)**

## Description

L'invention concerne un servomoteur d'assistance au freinage et s'applique avantageusement à tous les véhicules automobiles dont le circuit de freinage est équipé d'un tel servomoteur.

Dans la demande de brevet français n° FR-A-2597821 déposée le 23 avril 1986 par la Société BENDIX FRANCE, on a décrit un servomoteur d'assistance au freinage de conception classique. Ce servomoteur comprend notamment une enveloppe extérieure dans laquelle une chambre avant et une chambre arrière sont formées de part et d'autre d'une membrane souple, fixée de façon étanche sur un piston creux mobile selon l'axe du servomoteur. La chambre avant est reliée en permanence à une source de vide, alors que la chambre arrière communique par l'intermédiaire de deux valves contrôlées par un clapet commun, soit avec la chambre avant, soit avec l'atmosphère extérieure. Les positions occupées par ces valves dépendent de la position d'une tige de commande reliée à la pédale de frein et disposée selon l'axe du servomoteur, à l'intérieur du piston creux. Plus précisément, l'extrémité avant de la tige de commande porte un plongeur qui dispose d'un jeu axial prédéterminé à l'intérieur du piston.

Ce jeu est tel que le clapet commun aux deux valves est en appui étanche sur un siège de valve formé sur le plongeur et dégagé d'un siège de valve formé sur le piston lorsque la tige de commande occupe sa position arrière de repos. La chambre arrière communique alors avec la chambre avant et le piston est appliqué contre une surface de butée arrière formée sur l'enveloppe extérieure, sous l'action d'un ressort de rappel.

Au contraire, le clapet commun aux deux valves est en appui étanche sur le siège de valve formé sur le piston et espacé du siège de valve formé sur le plongeur lorsque la tige de commande est déplacée vers l'avant sous l'effet d'un actionnement de la pédale de frein. La communication entre les chambres avant et arrière est alors interrompue et cette dernière est mise en communication avec l'atmosphère extérieure. Le piston du servomoteur se déplace donc vers l'avant sous l'effet de la différence de pression entre les chambres arrière et avant, entraînant dans son mouvement une tige de sortie du servomoteur, qui actionne le piston d'un maître cylindre du circuit de freinage. L'assistance au freinage est ainsi assurée.

La description qui précède fait apparaître que c'est la course dont dispose le plongeur à l'intérieur du piston du servomoteur qui détermine successivement, lors de l'actionnement de la pédale de frein, la fermeture de la première valve par laquelle les chambres avant et arrière communiquent entre elles au repos, puis l'ouverture de la deuxième valve par laquelle la chambre arrière est ensuite mise en communication avec l'atmosphère extérieure.

Dans le document précité, cette course est déterminée par deux organes de butée montés à l'intérieur du piston et placés entre deux épaulements en vis-à-vis formés sur le plongeur. L'un de ces organes de butée est une plaque appelée clé fixe qui est immobilisée dans le piston et détermine la position maximale vers l'avant du plongeur à l'intérieur du piston lors de l'actionnement de la pédale de frein. L'autre organe de butée est une plaque basculante, dite clé basculante, dont une extrémité est articulée sur la clé fixe et dont l'extrémité opposée est repliée pour former une butée apte à venir en appui sur la surface de butée formée sur l'enveloppe extérieure du servomoteur, déterminant ainsi la position maximale arrière du plongeur lorsque la pédale de frein n'est pas actionnée.

Dans la demande de brevet français n° FR-A-2597821 déposée le 23 Avril 1986 par la Société BENDIX FRANCE, le maintien de la clé fixe à l'intérieur du piston est assuré par un jonc reçu dans une gorge formée sur le piston et dont les extrémités sont repliées parallèlement à l'axe de ce dernier, pour venir en appui sur le bord de la clé fixe tourné vers l'extérieur du piston. Le maintien en place de la clé basculante est assuré par la clé fixe, une partie déformée de la clé basculante étant enfermée entre le fond du logement formé dans le piston pour recevoir les clés et le bord correspondant de la clé fixe.

Cette structure connue a pour inconvénient que le montage des clés et leur immobilisation à l'aide du jonc sont relativement délicats. En particulier, il est difficile de contrôler que la partie déformée de la clé basculante est bien emprisonnée entre la clé fixe et le fond du logement. Il existe donc un risque pour que la clé basculante soit mal montée et ne soit pas maintenue par la clé fixe.

En outre, si l'extrémité repliée formant la butée de la clé basculante dans la demande de brevet français n° FR-A-2597821 est remplacée par une butée rapportée, par exemple pour faciliter le calibrage de cette butée, une chute de cette dernière est possible même lorsque la mise en place de la clé basculante est correcte.

L'invention a précisément pour objet un servomoteur d'assistance au freinage dans lequel le montage des clés et leur immobilisation sont facilités, le risque d'une mauvaise mise en place de la clé basculante et, le cas échéant, d'une chute de la butée rapportée sur cette clé, étant supprimés.

Conformément à l'invention, ce résultat est obtenu au moyen d'un servomoteur d'assistance au freinage comprenant une enveloppe extérieure, un piston creux, mobile axialement dans ladite enveloppe ; un premier moyen élastique tendant à déplacer ce piston vers une position arrière de repos dans laquelle une surface d'appui du piston est en contact avec une surface de butée de l'enveloppe extérieure ;

une tige de commande disposée selon l'axe du piston et portant un plongeur à une extrémité avant ; un deuxième moyen élastique tendant à déplacer la tige de commande vers une position arrière de repos ; un clapet de valve monté de façon étanche à l'intérieur du piston creux, autour de la tige de commande ; un troisième moyen élastique tendant à déplacer le clapet de valve vers l'avant pour l'amener en contact avec un premier siège de valve formé sur le plongeur, lorsque la tige de commande occupe sa position arrière de repos, et avec un deuxième siège de valve formé sur le piston, lorsque la tige de commande est déplacée vers l'avant ; un organe de butée fixe monté dans le piston creux et sur lequel vient en appui le plongeur lorsque la tige de commande est déplacée vers l'avant ; un organe de butée basculant dont une extrémité est apte à pivoter par rapport à l'organe de butée fixe et dont l'extrémité opposée porte une butée, la position arrière de repos de la tige de commande étant déterminée par la venue en appui du plongeur sur l'organe de butée basculant, la butée étant en appui sur ladite surface de butée de l'enveloppe ; et un jonc de maintien desdits organes de butée fixe et basculant, ce jonc étant reçu dans une gorge annulaire formée sur le piston et présentant au moins une partie de maintien en appui sur un bord de l'organe de butée fixe tourné vers l'extérieur du piston ; ce servomoteur étant caractérisé en ce que le jonc présente également une partie rectiligne orientée parallèlement à l'axe du piston et reçue dans une rainure formée dans la butée, de façon à permettre un pivotement de l'organe de butée basculant, tout en maintenant ce dernier dans le piston.

Dans un mode de réalisation préféré de l'invention, la partie de maintien et la partie rectiligne sont formées aux extrémités du jonc.

L'organe de butée fixe est constitué par exemple par une plaque plane échancrée en forme de U et dont le bord tourné vers l'extérieur du piston présente un doigt replié vers ladite gorge annulaire et sur lequel est en appui ladite partie de maintien du jonc. Cette dernière partie peut alors être orientée parallèlement à l'axe du piston et repliée contre le doigt à son extrémité.

L'organe de butée basculant est constitué par exemple par une plaque plane échancrée en forme de U et dont le bord tourné vers l'extérieur du piston présente une languette portant la butée. Pour assurer sa fixation, la butée peut alors comporter un perçage orienté parallèlement à l'axe du piston et dans lequel est reçue une partie emboutie de la plaque formant l'organe de butée basculant.

Un mode de réalisation préféré de l'invention va maintenant être décrit, à titre d'exemple nullement limitatif, en se référant aux dessins annexés dans lesquels :

    – la figure 1 est une vue de côté en coupe longitudinale, représentant la partie centrale d'un servomoteur d'assistance au freinage réalisé conformément à l'invention, les moitiés haute et basse de la figure illustrant respectivement les positions occupées par les différentes pièces au repos et lors d'un actionnement assisté de la pédale de frein,

    – la figure 2 est une section transversale partielle du servomoteur selon la ligne II-II de la figure 1,

    – la figure 3 est une section à plus grande échelle selon la ligne III-III de la figure 2, montrant l'agencement des extrémités de la clé fixe et de la clé basculante situées à l'intérieur du piston,

    – la figure 4 est une vue en coupe selon la ligne IV-IV de la figure 2, montrant à plus grande échelle la butée calibrée fixée à l'extrémité de la clé basculante, et

    – la figure 5 est une vue en perspective de la clé fixe, de la clé basculante et du jonc qui assure leur maintien, en position de fonctionnement, les autres pièces n'étant pas figurées pour faciliter la compréhension.

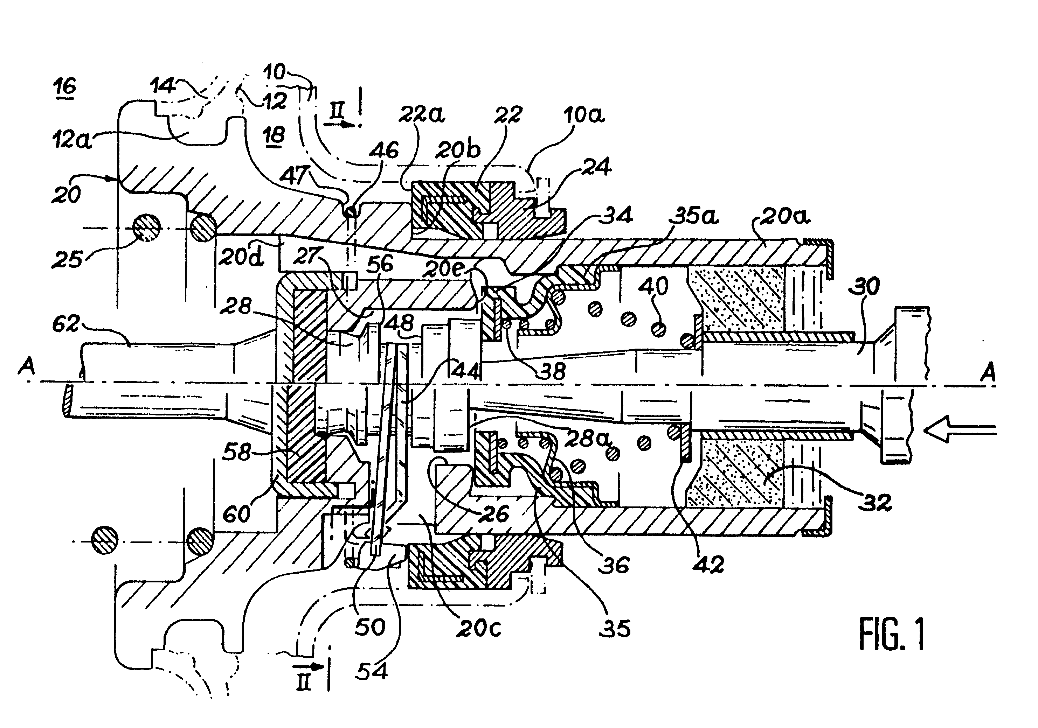

La figure 1 représente une partie d'un servomoteur d'assistance au freinage prévu pour être placé de façon habituelle entre la pédale de frein d'un véhicule et le maître cylindre commandant le circuit de freinage hydraulique. Par convention, on appelle avant du servomoteur la partie de ce dernier tournée vers le maître cylindre et arrière du servomoteur la partie tournée vers la pédale de frein.

Le servomoteur de la figure 1 comprend une enveloppe extérieure 10 en forme de coquille, présentant une symétrie de révolution autour d'un axe A-A. Seule la partie centrale arrière de cette enveloppe 10 est représentée sur la figure 1.

Une membrane souple en élastomère 12, renforcée dans sa partie centrale par un disque support métallique 14, définit à l'intérieur de l'espace délimité par l'enveloppe 10 une chambre avant 16 et une chambre arrière 18. Le bord périphérique extérieur (non représenté) de la membrane 12 est fixé de façon étanche sur l'enveloppe extérieure 10, alors que le bord périphérique intérieur de cette même membrane se termine par un bourrelet 12a reçu de façon étanche dans une gorge annulaire formée sur la surface périphérique extérieure d'un piston creux 20 disposé selon l'axe A-A du servomoteur. Ce piston creux 20 se prolonge vers l'arrière sous la forme d'une partie tubulaire 20a qui traverse de façon étanche la paroi arrière de l'enveloppe 10. L'étanchéité de cette traversée est assurée par un joint d'étanchéité annulaire armé 22 qui est fixé par une bague 24 dans une partie centrale tubulaire 10a prolongeant vers l'arrière la paroi arrière de l'enveloppe 10.

La face avant plane 22a du joint d'étanchéité 22 constitue une surface de butée contre laquelle est appliqué un épaulement 20b formé sur la surface extérieure du piston 20 et constituant une surface d'appui, lorsque le servomoteur est au repos. L'application de la surface d'appui 20b contre la surface de butée 22a est assurée par un ressort de compression 25 interposé entre le piston 20 et la paroi avant (non représentée) de l'enveloppe extérieure 10.

Dans sa partie centrale située entre la partie arrière tubulaire 20a et la partie avant dans laquelle est fixée la membrane 12, le piston 20 présente un passage étagé 26 comportant des couloirs longitudinaux 27 de circulation d'air. La partie avant de ce passage, de plus petit diamètre, reçoit en coulissement l'extrémité avant d'un plongeur 28 présentant également une symétrie de révolution autour de l'axe A-A. Ce plongeur 28 est solidarisé de l'extrémité avant d'une tige de commande 30 disposée également selon l'axe A-A. L'extrémité arrière de cette tige 30, qui fait saillie au-delà de l'extrémité arrière de la partie tubulaire 20a du piston 20, est commandée directement par la pédale de frein (non représentée).

L'espace annulaire délimité entre la tige de commande 30 et la partie tubulaire 20a du piston 20 débouche vers l'extérieur, à l'arrière du servomoteur, au travers d'un filtre à air annulaire 32. Vers l'avant, ce même espace annulaire peut communiquer avec la chambre arrière 18 au travers d'un passage radial 20c formé dans la partie centrale du piston, la communication étant contrôlée par une valve qui va maintenant être décrite.

Cette valve comprend un siège de valve annulaire 28a formé sur la face d'extrémité arrière du plongeur 28 et un clapet annulaire 34 monté dans la partie tubulaire 20a du piston. Ce clapet 34 est solidaire de l'extrémité avant de plus petit diamètre d'un manchon souple 35, en élastomère, dont l'extrémité arrière se termine par un bourrelet monté de façon étanche à l'intérieur de la partie tubulaire 20a. Ce bourrelet 35a est maintenu en place par une plaque métallique 36 sur laquelle prend appui un ressort de compression 38 tendant à déplacer le clapet 34 vers l'avant, pour le plaquer de façon étanche contre le siège 28a.

Un second passage 20d est formé dans la partie centrale du piston 20, approximativement parallèlement à son axe A-A, pour faire communiquer la chambre avant 16 du servomoteur avec une chambre annulaire formée autour du clapet 34, à l'intérieur de la partie tubulaire 20a du piston. Les chambres avant 16 et arrière 18 peuvent ainsi communiquer entre elles au travers des passages 20c et 20d, sous le contrôle d'une autre valve. Cette valve est délimitée entre le clapet 34 et un siège de valve annulaire 20e formé sur la face d'extrémité arrière de la partie centrale du piston 20.

Un ressort de compression 40 prend appui par son extrémité avant sur la plaque 36 et par son extrémité arrière sur un épaulement formé sur la tige de commande 30, au travers d'une rondelle 42. Ce ressort 40 permet de rappeler vers l'arrière la tige de commande 30, lors du relâchement de la pédale de frein. Secondairement, il maintient en place le bourrelet 35a du manchon souple 35 portant le clapet 34.

Un disque de réaction 58 en un matériau élastomère est maintenu en contact avec la face avant de la partie centrale du piston 20 par une coupelle métallique 60. Cette coupelle 60 est fixée à l'extrémité arrière d'une tige de sortie 62 du servomoteur, dont l'extrémité avant actionne le piston d'un maître-cylindre (non représenté).

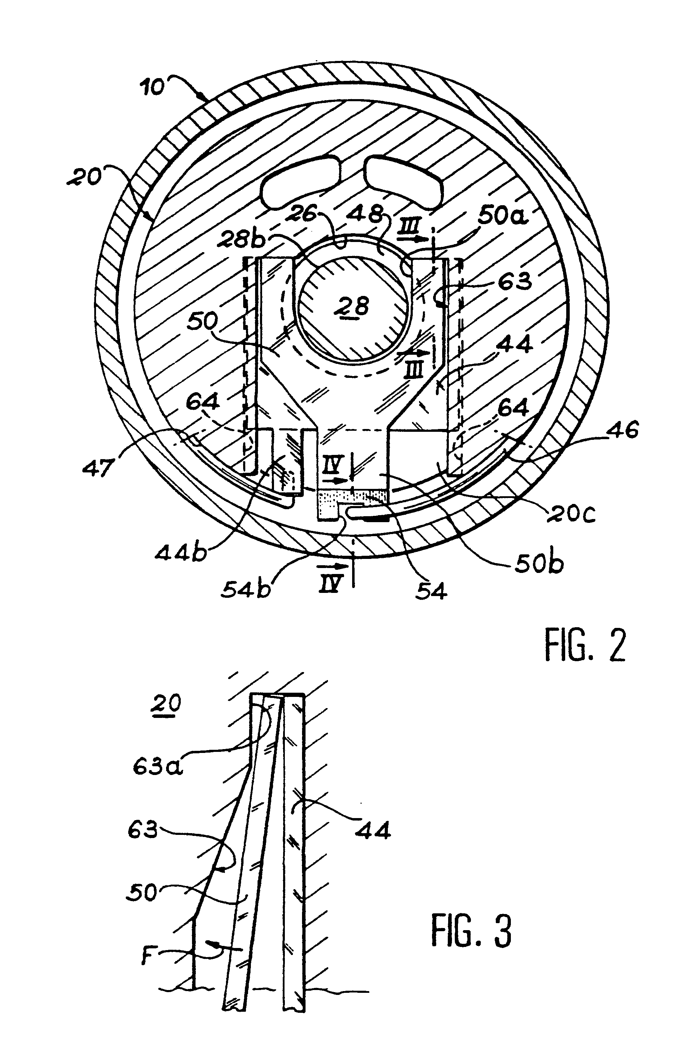

De façon connue, la course axiale dont dispose le plongeur 28 à l'intérieur de la partie centrale du piston 20 est limitée par deux organes de butée 44 et 50 reçus dans un logement 63 (figure 2) formé dans la partie centrale du piston 20, ce logement 63 communiquant avec le passage 26 à l'intérieur du piston et débouchant radialement par le passage 20c.

Conformément à l'invention les organes de butée 44 et 50 présentent une structure particulière qui va maintenant être décrite en détail en se référant aux figures 1 à 5.

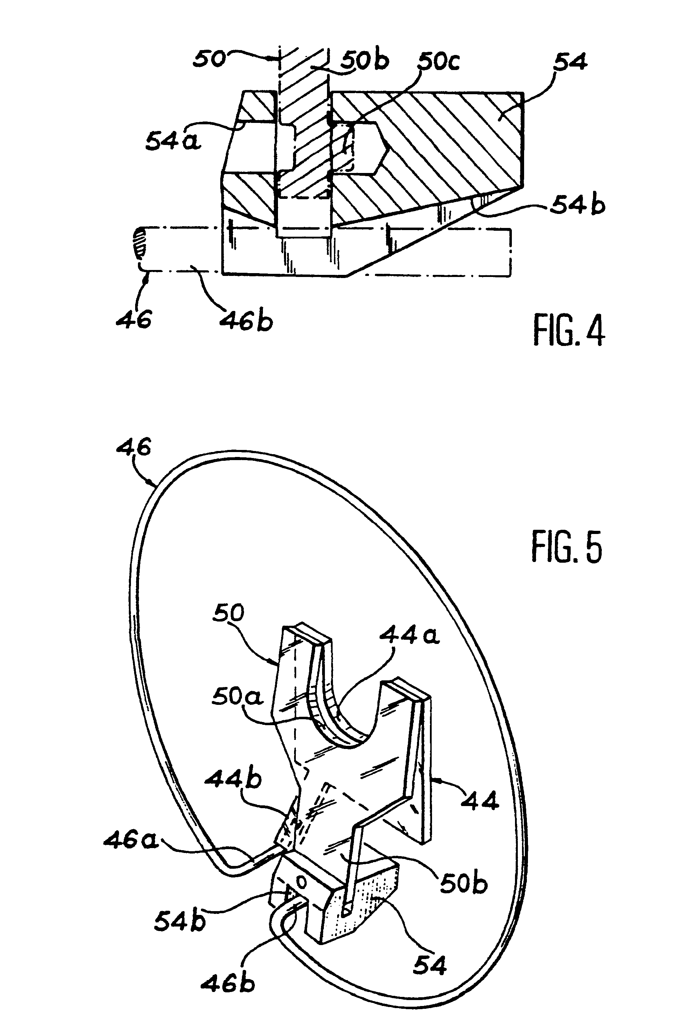

Un premier 44 de ces organes de butée, appelé clé fixe, est constitué par une plaque métallique plane montée perpendiculairement à l'axe A-A, dans le logement 63. Cette plaque 44 est reçue dans des glissières en vis-à-vis 64 formées sur les côtés du logement 63. Comme le montrent les figures 2 et 5, elle a la forme générale d'un rectangle présentant une échancrure 44a en forme de U que traverse une partie centrale 28b de diamètre réduit du plongeur 28.

Sur le bord de la plaque 44 tourné vers l'extérieur du piston 20 est formé un doigt rectangulaire 44b replié vers l'avant par rapport au plan de la plaque. L'angle formé entre le doigt 44b et la plaque 44 peut notamment être d'environ 30°. Comme l'illustrent les figures 2 et 5, le doigt 44b est décalé latéralement par rapport au centre du bord de la plaque 44 sur lequel il est formé.

La clé fixe 44 est disposée en vis-à-vis d'un épaulement 48 tourné vers l'avant formé sur le plongeur 28. En cas de défaillance de l'assistance, l'épaulement 48 vient en appui sur la clé 44 pour transmettre mécaniquement au piston 20 l'effort de freinage exercé sur la tige 30.

Le deuxième organe de butée 50 monté dans la partie centrale du piston 20 est un organe de butée basculant, appelé clé basculante, constitué par une plaque métallique plane. Cette plaque 50 comporte une échancrure 50a en forme de U identique à l'échancrure 44a et que traverse la partie centrale 28b de diamètre réduit du plongeur 28.

Comme le montre la figure 3, l'extrémité de la plaque 50 située à l'intérieur du piston 20 est maintenue en appui sur l'extrémité correspondante de la plaque 44 grâce à un rétrécissement 63a formé dans le fond du logement 63 contre lequel sont en appui les plaques 44 et 50. Ce rétrécissement 63a permet toutefois à la plaque 50 de pivoter dans le sens de la flèche F, afin que son extrémité opposée tournée vers l'extérieur du piston 20 s'écarte de la plaque fixe 44.

Dans sa partie centrale, le bord de la plaque basculante 50 tourné vers l'extérieur du piston 20 comporte une languette 50b à l'extrémité de laquelle est fixée une butée calibrée 54. La fixation de la butée 54 à l'extrémité de la languette 50b est assurée par une partie emboutie 50c de la languette qui pénètre dans un perçage 54a formé dans la butée 54 parallèlement à l'axe A-A du piston (figure 4).

La butée 54 est conçue pour venir en appui sur la surface de butée 22a lorsque le servomoteur n'est pas actionné, comme l'illustre la moitié haute de la figure 1. Dans ces conditions, la plaque 50 fait un certain angle avec la clé fixe 44 et elle constitue une butée sur laquelle peut venir en appui un épaulement 56 formé sur le plongeur 28 et tourné vers l'arrière, de façon à faire face à l'épaulement 48.

Conformément à l'invention, la clé fixe 44 et la clé basculante 50 sont maintenues en place indépendamment l'une de l'autre par un jonc 46 reçu dans une gorge annulaire 47 formée sur la surface extérieure du piston 20 et légèrement décalée vers l'avant par rapport aux clés.

Ainsi et comme le montre la figure 5, une extrémité 46a du jonc 46 est repliée vers l'arrière parallèlement à l'axe A-A pour venir en appui sur le bord d'extrémité du doigt 44b, puis vers cet axe de façon à être également en appui avec la face arrière du doigt 44b. De cette manière, l'extrémité 46a du jonc maintient la clé fixe 44 à l'intérieur du logement 63 formé dans le piston 20.

Par ailleurs, l'extrémité opposée 46b du jonc 46 est également repliée vers l'arrière parallèlement à l'axe A-A, pour venir se loger dans une rainure 54b formée parallèlement à l'axe A-A sur la face de la butée 54 tournée vers l'extérieur du piston 20. On voit sur la figure 4 que la rainure 54b est plus profonde à ses extrémités que dans sa partie centrale, pour permettre le pivotement de la clé basculante 50. L'extrémité 46b du jonc assure ainsi le maintien de la clé basculante 50 dans le logement 63 formé dans le piston 20 et empêche l'échappement de la butée 54 en cas de mauvaise fixation de cette dernière sur le doigt 50b.

Grâce à la structure qui vient d'être décrite, le montage des clés 44 et 50 est facilité. En particulier, les deux extrémités du jonc 46 maintiennent les deux clés indépendamment l'une de l'autre et de façon visible, de sorte qu'un mauvais montage conduisant à un risque d'échappement de la clé basculante 50 est impossible. De plus, la butée calibrée 54 est également maintenue par l'extrémité 46b du jonc, même en cas de mauvaise fixation de cette butée sur la languette 50b de la clé basculante.

Lorsque le servomoteur qui vient d'être décrit est installé sur un véhicule, la chambre avant 16 communique en permanence avec une source de vide.

Lorsque la pédale de frein n'est pas actionnée, les différents éléments du servomoteur occupent les positions représentées sur la moitié supérieure de la figure 1. En particulier, le ressort de rappel 40 maintient la tige de commande 30 et le plongeur 28 dans leur position extrême arrière, dans laquelle l'épaulement 56 du plongeur est en appui sur la clé basculante 50, la butée calibrée 54 portée par cette dernière étant elle-même en appui sur la surface de butée 22a. Dans ces conditions, le siège 28a du plongeur est en appui étanche sur le clapet 34, ce dernier étant écarté du siège 20e du piston.

Les chambres avant 16 et arrière 18 communiquent alors entre elles par le passage 20d, le jeu formé entre le siège 20e et le clapet 34, et le passage 20c. En revanche, la valve commandant la communication de la chambre arrière 18 avec l'atmosphère extérieure est fermée. Les deux chambres 16 et 18 sont donc sous vide et la position du piston 20 est déterminée par l'action du ressort de compression 25, qui plaque la surface d'appui 20b du piston contre la surface de butée 22a.

Lorsque le conducteur du véhicule actionne la pédale de frein, la tige de commande 30 et le plongeur 28 se déplacent vers l'avant. Ce déplacement est sans effet sur le piston 20 tant que la course morte existant au repos entre le clapet 34 et le siège de valve 20e n'est pas rattrapée. Ensuite, le clapet 34 vient en appui étanche sur le siège 20e, interrompant ainsi la communication entre les chambres 16 et 18 du servomoteur.

Le déplacement vers l'avant du plongeur 28 dans le piston 20 se poursuit jusqu'à ce que le siège de valve 28a soit légèrement écarté du clapet 34. La chambre arrière 18 du servomoteur est alors mise en communication avec l'atmosphère extérieure par le passage 20c, le passage formé entre le siège 28a et le clapet 34 et l'espace annulaire délimité entre la partie tubulaire 20a du piston et la tige de commande 30. La différence de pression qui apparaît alors entre la chambre arrière 18 et la chambre avant 16, toujours sous vide, déplace le piston 20 vers l'avant, ce qui permet d'assister pneumatiquement l'action mécanique de freinage, tant que le déplacement vers l'avant de la tige de commande se poursuit.

Le déplacement de la tige 62 commandant le maître cylindre est donc assuré par le déplacement du piston 20 du servomoteur.

Lorsque la pédale de frein est relâchée, les différents éléments constituant le servomoteur retrouvent les positions représentées sur la moitié supérieure de la figure 1, notamment sous l'action des ressorts 40 et 25.

Bien entendu, l'invention n'est pas limitée au mode de réalisation qui vient d'être décrit, mais est déterminée par le teneur des revendication qui suivent.

Ainsi, les parties du jonc qui assurent le maintien de la clé fixe et de la clé basculante peuvent ne pas être formées aux extrémités du jonc, mais dans une autre zone de celui-ci. Le maintien de la clé fixe peut en outre être assuré par deux parties du jonc orientées parallèlement à l'axe du piston et venant en appui sur deux doigts formés symétriquement sur le bord de la clé fixe tourné vers l'extérieur du piston. Enfin, la butée 54 peut ne pas être rapportée sur la clé basculante mais formée directement sur celle-ci, par exemple sous la forme d'une partie repliée de l'extrémité de la languette.

Par ailleurs, la structure constituée par les clés 44 et 50 et par le jonc 46 peut être utilisée dans des servomoteurs d'assistance au freinage présentant une configuration différente de celle qui a été décrite.

## Revendications

1. Servomoteuer d'assistance au freinage comprenant une enveloppe extérieure (10), un piston creux (20), mobile axialement dans ladite enveloppe; un premier moyen élastique (25) tendant à déplacer ce piston vers une position arrière de repos dans laquelle une surface d'appui (20b) du piston est en contact avec une surface de butée (22a) de l'enveloppe extérieure ; une tige de commande (30) disposée selon l'axe du piston et portant un plongeur (28) à une extrémité avant ; un deuxième moyen élastique (40) tendant à déplacer la tige de commande vers une position arrière de repos ; un clapet de valve (34) monté de façon étanche à l'intérieur du piston creux, autour de la tige de commande ; un troisième moyen élastique (38) tendant à déplacer le clapet de valve vers l'avant pour l'amener en contact avec un premier siège de valve (28a) formé sur le plongeur, lorsque la tige de commande occupe sa position arrière de repos, et avec un deuxième siège de valve (20e) formé sur le piston, lorsque la tige de commande est déplacée vers l'avant ; un organe de butée fixe (44) monté dans le piston creux et sur lequel vient en appui le plongeur lorsque la tige de commande est déplacée vers l'avant ; un organe de butée basculant (50) dont une extrémité est apte à pivoter par rapport à l'organe de butée fixe et dont l'extrémité opposée comporte une butée (54), la position arrière de repos de la tige de commande étant déterminée par la venue en appui du plongeur (28) sur l'organe de butée basculant (50), la butée (54) étant en appui sur ladite surface de butée (22a) de l'enveloppe ; et un jonc (46) de maintien desdits organes de butée fixe (44) et basculant (50), ce jonc (46) étant reçu dans une gorge annulaire (47) formée sur le piston (20) et présentant au moins une partie de maintien (46a) en appui sur un bord de l'organe de butée fixe (44) tourné vers l'extérieur du piston (20) ; ce servomoteur étant caractérisé en ce que le jonc (46) présente également une partie rectiligne (46b) orientée parallèlement à l'axe du piston et reçue dans une rainure (54b) formée dans la butée (54) de façon à permettre un pivotement de l'organe de butée basculant (50), tout en maintenant ce dernier dans le piston (20).

2. Servomoteur selon la revendication 1, caractérisé en ce que ladite partie de maintien (46a) et ladite partie rectiligne (46b) sont formées aux extrémités du jonc (46).

3. Servomoteur selon l'une quelconque des revendications 1 et 2, caractérisé en ce que l'organe de butée fixe (44) est une plaque plane échancrée en forme de U et dont le bord tourné vers l'extérieur du piston (20) présente un doigt (44b) replié vers ladite gorge annulaire (47) et sur lequel est en appui ladite partie de maintien (46a) du jonc.

4. Servomoteur selon les revendications 2 et 3, caractérisé en ce que la partie de maintien (46a) du jonc (46) est orientée parallèlement à l'axe du piston (20) et repliée contre le doigt (44b) à son extrémité.

5. Servomoteur selon l'une quelconque des revendications 1 à 4, caractérisé en ce que l'organe de butée basculant (50) est une plaque plane échancrée en forme de U et dont le bord tourné vers l'extérieur du piston (20) présente une languette (50b) portant la butée (54).

6. Servomoteur selon la revendication 5, caractérisé en ce que la butée (54) comporte un perçage (54a) orienté parrallèlement à l'axe du piston (20) et dans lequel est reçue une partie emboutie (50c) de la plaque formant l'organe de butée basculant (50).

## Ansprüche

1. Bremshilfe-Servoantrieb, mit einem Außenmantel (10), einem Hohlkolben (20), der in dem Mantel axial beweglich ist ; einem ersten elastischen Mittel (25), das so gespannt ist, daß es diesen Kolben in eine rückwärtige Ruhestellung verschiebt, in der eine Stützfläche (20b) des Kolbens eine Anschlagfläche (22a) des Außenmantels berührt ; einer Steuerstange (30), die in der Mittellinie des Kolbens angeordnet ist und an einem vorderen Ende einen Tauchkolben (28) trägt ; einem zweiten elastischen Mittel (40), das so gespannt ist, daß es die Steuerstange in eine rückwärtige Ruhestellung verschiebt ; einem Ventildeckel (34), der auf dichte Weise im Inneren des Hohlkolbens die Steuerstange umgebend angebracht ist ; einem dritten elastischen Mittel (38), das so gespannt ist, daß es den Ventildeckel nach vorne verschiebt, damit dieser dann, wenn die Steuerstange ihre rückwärtige Ruhestellung einnimmt, mit einem am Tauchkolben ausgebildeten ersten Ventilsitz (28a) und dann, wenn die Steuerstange nach vorne verschoben wird, mit einem auf dem Hohlkolben ausgebildeten zweiten Ventilsitz (20e) in Kontakt gelangt ; einem festen Anschlagelement (44), das am Hohlkolben angebracht ist und auf dem sich der Tauchkolben abstützt, wenn die Steuerstange nach vorne verschoben wird ; einem klappbaren Anschlagelement (50), von dem ein Ende in bezug auf das feste Anschlagelement klappbar ist und dessen gegenüberliegendes Ende einen Anschlag (54) umfaßt, wobei die rückwärtige Ruhestellung der Steuerstange durch die Abstützung des Tauchkolbens (28) auf dem klappbaren Anschlagelement (50) festgelegt wird und wobei sich der Anschlag (54) auf der Anschlagfläche (22a) des Mantels aufstützt ; und einem Ring (46), der das feste (44) und das klappbare (50) Anschlagelement hält, wobei dieser Ring (46) in einer am Hohlkolben (20) ausgebildeten Ringnut (47) aufgenommen wird und wenigstens einen Halteteil (46a) aufweist, der sich auf einer Kante des festen Anschlagelements (44), das zur Außenseite des Hohlkolbens (20) geschwenkt ist, abstützt ; wobei der Servoantrieb dadurch gekennzeichnet ist, daß der Ring (46) gleichermaßen einen geradlinigen Teil (46b) aufweist, der parallel zur Mittellinie des Hohlkolbens orientiert ist und in einer im Anschlag (54) ausgebildeten Rille (54b) so aufgenommen wird, daß eine Schwenkung des klappbaren Anschlagelementes (50) bei im Hohlkolben (20) gehaltenem klappbaren Anschlagelement (50) möglich ist.

2. Servoantrieb gemäß Anspruch 1, dadurch gekennzeichnet, daß der Halteteil (46a) und der geradlinige Teil (46b) an den Enden des Rings (46) ausgebildet sind.

3. Servoantrieb gemäß einem der Ansprüche 1 und 2, dadurch gekenzeichnet, daß das feste Anschlagelement (44) eine in U-Form ausgebogte ebene Platte ist, deren zur Außenseite des Kolbens (20) geschwenkte Kante einen in Richtung der Ringnut (47) umgebogenen Zapfen (44b) aufweist, auf dem sich der Halteteil (46a) des Rings aufstützt.

4. Servoantrieb gemäß den Ansprüchen 2 und 3, dadurch gekennzeichnet, daß der Halteteil (46a) des Rings (46) parallel zur Mittellinie des Hohlkolbens (20) orientiert ist und an seinem Ende zum Zapfen (44b) umgebogen ist.

5. Servoantrieb gemäß einem der Ansprüche 1 bis 4, dadurch gekennzeichnet, daß das klappbare Anschlagelement (50) eine in U-Form ausgebogte ebene Platte ist, deren zur Außenseite des Hohlkolbens (20) geschwenkte Kante eine den Anschlag (54) tragende Lasche (50b) aufweist.

6. Servoantrieb gemäß Anspruch 5, dadurch gekennzeichnet, daß der Anschlag (54) eine parallel zur Mittellinie des Hohlkolbens (20) orientierte Rille (54a) enthält, die einen tiefgezogenen Teil (50c) der das klappbare Anschlagelement (50) bildenden Platte aufnimmt.

## Claims

1. Brake booster comprising an external casing (10), a hollow piston (20), which is axially mobile in the said casing ; a first resilient means (25) which tends to displace this piston into a rear rest position in which a bearing surface (20b) of the piston is in contact with a stop surface (22a) of the external casing ; a control rod (30) arranged along the axis of the piston and carrying a plunger (28) at a front end ; a second resilient means (40) which tends to displace the control rod into a rear rest position ; a valve flap (34) mounted in sealed manner inside the hollow piston, around the control rod ; a third resilient means (38) which tends to displace the valve flap forwards to bring it into contact with a first valve seat (28a) formed on the plunger, when the control rod occupies its rear rest position, and with a second valve seat (20e) formed on the piston, when the control rod is displaced forwards ; a stationary stop member (44) mounted in the hollow piston, and on which the plunger bears when the control rod is displaced forwards ; a tilting stop member (50), of which one end is suitable to pivot with respect to the stationary stop member and of which the opposite end has a stop (54), the rear rest position of the control rod being determined by the plunger (28) coming to bear on the tilting stop member (50), and the stop (54) bearing against the said stop surface (22a) of the casing ; and a retaining ring (46) for holding the said stationary (44) and tilting (50) stop members, this retaining ring (46) being received in an annular groove (47) formed in the piston (20) and having at least one holding part (46a) bearing against one edge of the stationary stop member (44) turned towards the outside of the piston (20) ; this booster being characterized in that the retaining ring (46) also has a rectilinear part (46b) oriented in parallel with the axis of the piston and received in a groove (54b) formed in the stop (54), so as to enable the tilting stop member to pivot (50), while keeping the latter in the piston (20).

2. Booster according to Claim 1, characterized in that the holding part (46a) and the said rectilinear part (46b) are formed at the ends of the retaining ring (46).

3. Booster according to either of Claims 1 and 2, characterized in that the stationary stop member (44) is a notched flat plate in a U shape, of which the edge turned towards the outside of the piston (20) has a finger (44b) which is bent back towards the said annular groove (47) and against which the said holding part (46a) of the retaining ring bears.

4. Booster according to Claims 2 and 3, characterized in that the holding part (46a) of the retaining ring (46) is oriented parallel to the axis of the piston (20) and bent back against the finger (44b) at its end.

5. Booster according to any one of Claims 1 to 4 characterized in that the tilting stop member (50) is a notched flat plate in a U shape, of which the edge turned towards the outside of the piston (20) has a tongue (50b) carrying the stop (54).

6. Booster according to Claim 5, characterized in that the stop (54) has a borehole (54a) which is oriented parallel to the axis of the piston (20) and in which there is received a hollowed part (50c) of the plate forming the tilting stop member (50).

FIG. 1

FIG. 2

FIG. 3

50  50b  50c  54

54a

54b

46  46b

FIG. 4

46

FIG. 5

50

44a

50a

44b

44

46a

54b

50b

54

46b